# FASCICULE DE BREVET EUROPEEN

(11) **EP 1 495 823 B1**
(45) Date de publication et mention de la délivrance du brevet: **20.12.2006**
(21) Numéro de dépôt: 04356064.8
(22) Date de dépôt: 07.05.2004
(51) Int. Cl.: B23D 59/02, B28D 1/14, B23Q 11/10, B23B 51/06

(54) **Dispositif de forage notamment à pointe diamant avec refroidissement intégré**
Bohrvorrichtung, insbesondere mit Diamantkopf und integrierter Kühlung
Drilling device, in particular having a diamond head with integrated cooling

(30) Priorité: 11.07.2003 FR 0308749
(43) Date de publication de la demande: 12.01.2005
(73) Titulaire: M.B.H. Developpement, 42120 St. Vincent de Boisset (FR)
(72) Inventeur: Bottazzi, Marc, 42120 Saint Vincent de Boisset (FR)
(74) Mandataire: Dupuis, François

(56) Documents cités:
- DE-U- 20 016 941
- US-B1- 6 210 083
- PATENT ABSTRACTS OF JAPAN vol. 2003, no. 04, 2 avril 2003 (2003-04-02) -& JP 2002 361626 A (HORI KOUICHIRO), 18 décembre 2002 (2002-12-18)
- PATENT ABSTRACTS OF JAPAN vol. 014, no. 119 (M-0945), 6 mars 1990 (1990-03-06) -& JP 01 316109 A (HITACHI KOKI CO LTD), 21 décembre 1989 (1989-12-21)

## Description

L'invention se rattache au secteur technique des forets à pointe diamant, carbures ou similaires utilisés pour le perçage dans des matériaux durs du type béton, céramique, pierres de façade et similaires. En particulier, l'invention concerne un dispositif de forage selon le préambule de la revendication 1. DE 200 16 941 U1 montre un tel dispositif.

Selon l'art antérieur, on connaît des unités de forage autonome présentant des forets à pointe diamantée carbures et similaires faisant intervenir à partir d'un portique support d'une machine électroportative du type perceuse, l'adjonction d'un équipement permettant une distribution de fluide de refroidissement. Ce type d'unité de forage nécessite un raccordement à un dispositif d'alimentation en fluide par des canalisations et conduits qui sont extérieurs à la machine électroportative et exigeant des moyens de protection de celle-ci. La diffusion du fluide de refroidissement s'effectue en introduisant le fluide refroidissant dans le corps creux intérieur du foret, et un récupérateur de fluide est alors disposé en regard du foret avec un dispositif d'aspiration. Ceci est nécessaire par suite des quantités de fluide projeté. L'alimentation en liquide de refroidissement en eau par exemple requiert l'utilisation d'une pompe autonome avec une certaine réserve en quantité d'eau, ou un branchement à un circuit de distribution d'eau.

Une telle unité de forage est donc complexe et coûteuse et pas toujours facile à transporter. Par ailleurs, il est difficile de réguler le volume du fluide distribué pouvant entraîner une inadaptation du volume du fluide de refroidissement distribué par rapport aux besoins et aux perçages effectués.

A partir de ce constat et connaissant parfaitement les unités de forage rappelées précédemment, étant amené à les commercialiser, la démarche du Demandeur a donc été de réfléchir à la recherche d'un nouveau concept de distribution du fluide de refroidissement sur ou à travers un foret à pointe diamant, carbures ou similaires, afin de simplifier la mise en oeuvre des unités de forage du type précité, en facilitant le transport et en réduisant les coûts, et en répondant d'une manière simple aux exigences des quantités et volumes de fluides de refroidissement à distribuer, en fonction des paramètres des forages à exécuter.

Cet objet a été résolu par la combinaison des caractéristiques de la revendication 1. Les revendications dépendantes décrivent des réalisations préférées de l'invention.

Pour fixer l'objet de l'invention illustré d'une manière non limitative aux figures des dessins où :

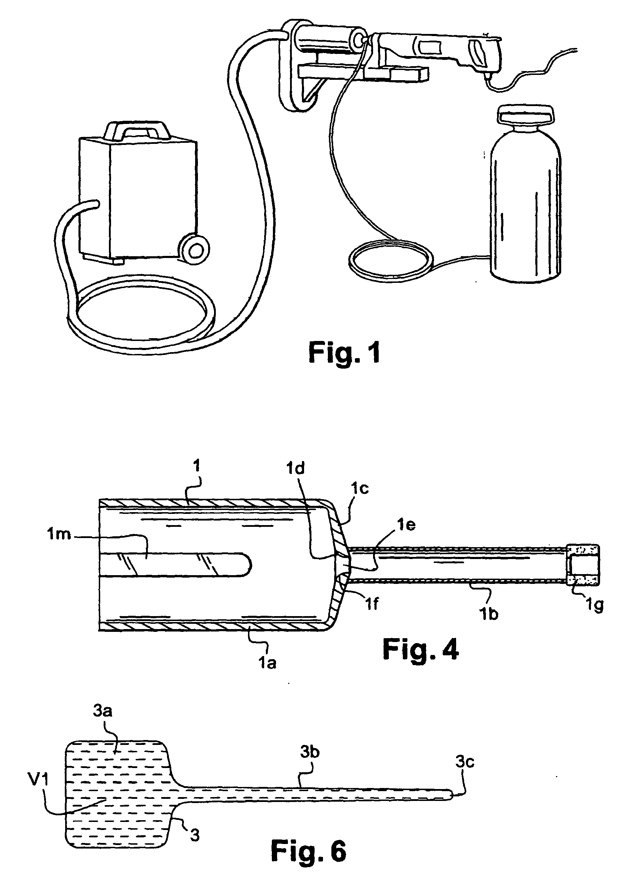

- La figure 1 est une vue d'une unité de forage selon l'art antérieur.
- La figure 2 est une vue d'ensemble du dispositif de forage avant assujettissement du foret sur le porte-foret.
- La figure 3 est une vue en coupe transversale du porte-foret selon la ligne AA de la figure 2.
- La figure 4 est une vue en coupe du foret selon l'invention avec sa partie d'extrémité diamantée.
- La figure 5 est une vue de l'extrémité avant de la tête du foret.

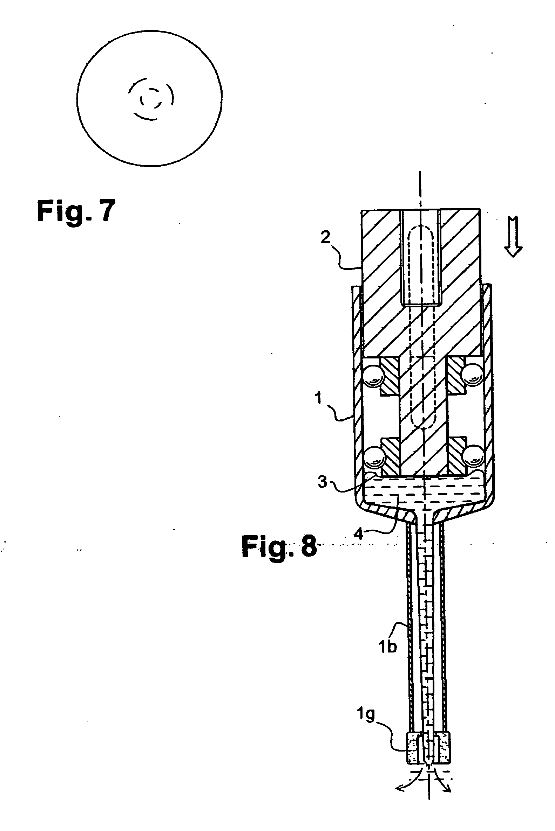

- La figure 6 est une vue de côté de la cartouche réceptrice du fluide de refroidissement.
- La figure 7 est une vue avant de la cartouche selon la figure 6.
- La figure 8 est une vue illustrant le fonctionnement du dispositif de forage selon l'invention avec mise en place du foret sur le porte-foret.

Afin de rendre plus concret l'objet de l'invention, on le décrit maintenant d'une manière non limitative illustrée aux figures des dessins.

Le dispositif de forage selon l'invention est référencé dans son ensemble par (D) et comprend trois composants principaux, à savoir un foret (1), un porte-foret (2), une cartouche (3) remplie d'un fluide (4) de refroidissement.

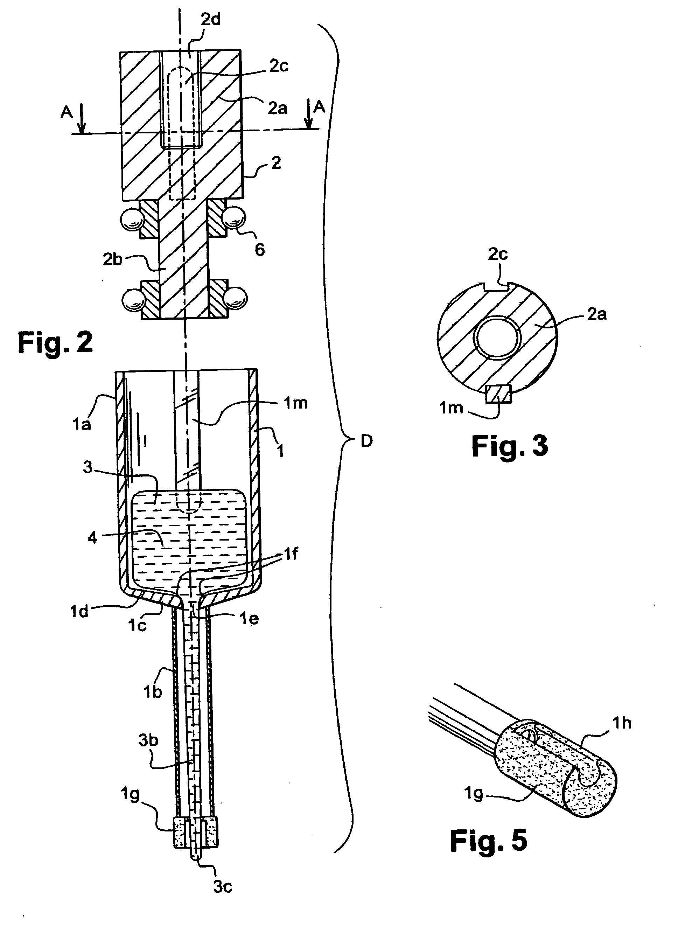

Le foret (1) présente un corps creux tubulaire (1a) dont la partie avant se prolonge par une tête (1b) tubulaire de moindre diamètre et de grande longueur. Cette tête peut- être rapportée et fixée de toute manière appropriée à la face avant (1c) du foret, ou être obtenue monobloc lors de la fabrication du foret. Intérieurement, le foret présente dans sa partie avant intérieure (1d) une forme en siège ainsi qu'il sera exposé. Une ouverture centrale (1e) est établie avec une forme en bec (1f) de rétrécissement définissant chacune des parois de la partie avant du foret et constituant un moyen de retenue. L'extrémité avant de la tête (1b) est agencée pour recevoir une partie diamantée (1g) ou en carbure ou similaire, constituant la partie active de l'outil pour effectuer l'opération de forage. Cette partie active est creuse intérieurement dans le prolongement de la cavité intérieure de la tête (1b) du foret. Cette partie creuse présente une configuration en segments, comme représenté dans la figure 5 avec une découpe longitudinale (1h) permettant une distribution du fluide de refroidissement (4). Comme représenté dans la figure 5, la partie creuse est déportée pour permettre de forer des trous borgnes. Le liquide de refroidissement en provenance de la cartouche, ainsi qu'il sera décrit ensuite, pourra donc s'échapper à la fois dans les sens longitudinal et radial optimisant le refroidissement sur l'outil. Par ailleurs, le foret présente intérieurement au moins un moyen d'entraînement par exemple un trou de clavetage longitudinal sur une partie de la longueur de son corps pour constituer un moyen femelle d'entraînement (1m) en rotation tout en acceptant le glissement du porte-foret. Le foret ainsi décrit est susceptible de recevoir une cartouche (3) profilée constituée par une enveloppe en matériau déformable par exemple du type matière plastique polyéthylène par exemple ayant des caractéristiques de déformation sous une action de pression et de poussée, et ayant une certaine tenue en égard des caractéristiques spécifiques ci-après. Cette cartouche présente une partie principale (3a) en forme de poche qui est insérée dans le foret (1) en venant prendre appui sur la partie siège (1d), cette poche se prolongeant par un appendice tubulaire (3b) qui est susceptible de pénétrer dans la partie tête tubulaire du foret et d'en déborder. La cartouche est susceptible de recevoir un liquide de refroidissement correspondant à un volume (V1) donné. En situation initiale, ladite cartouche est fixée à étanchéité et le fluide est retenu. L'extrémité (3c) de l'appendice débordant de la poche active diamantée du foret peut présenter une réduction d'épaisseur ou des lignes de prédécoupe. En situation initiale, la cartouche épouse donc la cavité intérieure du foret et prend appui sur la partie siège (1d) précitée, tandis que l'appendice est guidé dans la partie tête.

Le porte-foret (2) présente un manchon cylindrique (2a) avec un prolongement axial (2b) à l'avant sur lequel s'ajustent des moyens de roulement (6) tels que bague bronze, roulements sans cage et similaires. Le manchon (2a) présente longitudinalement au moins un glissement et/ou de clavetage (2c) qui est susceptible de recevoir la ou les parties femelles (1m) correspondantes formées sur le foret. Le porte-foret (2) présente lui-même un taraudage (2d) permettant son ajustement avec la partie tournante de la machine électroportative, ou autre. L'emmanchement peut être établi de toute manière appropriée, avec aussi une machine à entraînement pneumatique ou hydraulique.

Ledit porte-foret est susceptible d'être déplacé progressivement dans le sens longitudinal axial du foret par tous moyens appropriés, de manière à permettre l'exercice d'une pression progressive sur la cartouche.

La mise en oeuvre du dispositif de forage selon l'invention est la suivante. Une cartouche est établie pour correspondre à une dose nécessaire de fluide de refroidissement nécessaire à un perçage de paroi par le foret diamantée. En d'autres termes, il peut y avoir une pluralité de jeux de cartouches selon des doses préétablies et différentes pour tenir compte des opérations de perçage selon les profondeurs, les diamètres de perçage et de la nature du matériau percé.

En pratique, la mise en rotation du foret par son entraînement avec le porte-foret solidaire de manière démontable de la perceuse, et son rapprochement contre la paroi à percer va entraîner un contact de l'extrémité de l'appendice de la cartouche et ainsi son ouverture par déchirement de par l'effet d'abrasion. Le fluide pressé va donc s'écouler lors de l'opération de perçage. A cet effet, le porte-foret sous l'action de poussée d'un moyen associé à la machine électroportative ou autre machine va progressivement s'engager dans la cavité intérieure du foret et avoir un appui de plus en plus pressant sur la cartouche provoquant l'évacuation du fluide. Ainsi, il y a en quelque sorte un dosage dans la pression exercée par le porte-foret sur la cartouche provoquant l'aplatissement progressif de celle-ci et l'évacuation du fluide jusqu'à épuisement, cela correspondant à la fin de l'opération de perçage.

L'enlèvement de la cartouche est aisé. Il suffit de sortir le porte-foret du foret par glissement, et la cartouche déformée et libérée de son fluide de refroidissement va tomber par gravité en retournant le foret. Par ailleurs, le foret tient de lui-même sur le porte-foret, car il est toujours en pression en situation de fonctionnement.

La solution proposée par l'invention est simple à mettre en oeuvre. Lorsqu'un perçage est effectué, une cartouche vide doit être enlevée et remplacée par une autre cartouche choisie en fonction des critères sélectionnés du perçage suivant.

Par cette mise en oeuvre de l'invention, on supprime sur l'unité portable tous les circuits d'alimentation en fluide avec le risque de détérioration du bloc moteur. Le fluide utilisé n'est pas gaspillé et le volume utilisé correspond parfaitement au volume nécessaire pour des perçages dont les paramètres ont été définis.

Par ailleurs, les moyens de collecte du fluide et du dispositif d'aspiration ne sont plus automatiquement nécessaires, la quantité de fluide étant préétablie. Il n'y a plus de surplus de fluide à évacuer ou à aspirer.

Le changement de cartouches est rapide à exécuter. Le transport de l'unité de forage est aisé.

Les moyens d'accouplement du porte-foret sur la machine de perçage électroportative sont de tous types appropriés. Les moyens de poussée du porte-foret à l'intérieur du foret pour vider le fluide contenu dans la cartouche sont de tous types appropriés.

## Revendications

1. Dispositif de forage à pointe diamant avec refroidissement intégré, comprenant un foret (1) réalisé et présentant un corps creux (1a) dont la partie avant se prolonge par une tête tubulaire (1b) de moindre diamètre et de grande longueur dont l'extrémité débordante est agencée pour recevoir la partie active de forage diamantée (1 g), ou carbure ou similaire, **caractérisé**
**en ce que** ledit foret (1) comprend une cartouche (3) déformable remplie d'un fluide de refroidissement (4) présentant une forme en poche (3a) introduite dans le corps dudit foret et venant en appui sur la partie siège intérieur (1d) de celui-ci, ladite poche présentant un appendice (3b) longitudinal introduit dans la tête tubulaire du foret et étant sensiblement en débordement de la partie active diamantée (1g),
et **en ce que** le foret comprend à l'arrière et à l'intérieur de son corps un moyen presseur porte-foret (2) susceptible d'appliquer une force de compression sur la poche (3) et permettant après déchirure le vidage complet du fluide de refroidissement contenu.

2. Dispositif selon la revendication 1, **caractérisé en ce que** le foret (1) présente une ouverture centrale (le) établie avec une forme en bec (1f) de rétrécissement et constituant un moyen de retenue.

3. Dispositif selon l'une quelconque des revendications 1 et 2, **caractérisé en ce que** la partie active diamantée (1g) disposée en bout de la partie tête (1b) du foret est creuse intérieurement dans le prolongement de la cavité intérieure de la tête (1b) du foret, et **en ce qu'**elle présente une découpe longitudinale (1h) permettant la distribution du fluide de refroidissement.

4. Dispositif selon la revendication 3, **caractérisé en ce que** la partie active creuse est déportée.

5. Dispositif selon l'une quelconque des revendications 1 à 4, **caractérisé en ce que** le foret présente intérieurement au moins un moyen d'entraînement en rotation tel qu'un trou de clavetage (1m) longitudinal constituant un moyen femelle d'entraînement en rotation et acceptant le glissement du porte-foret et coopérant avec au moins un clavetage (2c) établi sur le porte-foret (2).

6. Dispositif selon l'une quelconque des revendications 1 à 5, **caractérisé en ce que** la cartouche (3) présente une partie principale (3a) en fin de poche insérée dans le foret (1) en prenant appui sur la partie siège (1d), la poche se prolongeant par un appendice tubulaire (3b) engagé dans la partie tête tubulaire (1b) du foret traversant la partie diamantée (1g) et débordant de celle-ci en situation de non-sollicitation par son extrémité (3c).

7. Dispositif selon la revendication 6, **caractérisé en ce que** la partie d'extrémité (3c) de la cartouche présente une zone déchirable après le contact avec la paroi à forer.

8. Dispositif selon l'une quelconque des revendications 6 et 7, **caractérisé en ce que** la cartouche (3) définit un volume (V1) de réception d'un fluide de refroidissement correspondant à un dosage préétabli en fonction des caractéristiques du trou à percer.

9. Dispositif selon l'une quelconque des revendications 6, 7, 8, **caractérisé en ce que** la cartouche est réalisée en une matière plastique ayant des caractéristiques de déformation sous une pression du porte-foret.

10. Dispositif selon l'une quelconque des revendications 1 à 9, **caractérisé en ce que** le porte-foret présente un manchon cylindrique (2a) avec un prolongement axial (2b) à l'avant sur lequel s'ajustent des moyens de roulement (6), le porte-foret (2) présentant un taraudage (2d) permettant son ajustement avec la partie tournante de la machine électroportative, ledit porte-foret étant susceptible d'être déplacé progressivement dans le foret en exerçant une pression progressive sur la cartouche et permettant l'évacuation du fluide de refroidissement.

11. Dispositif selon l'une quelconque des revendications 1 à 10, **caractérisé en ce que** le foret est monté guidé et libre sur le porte-foret en étant monté à glissement et/ou roulement l'un par rapport à l'autre, le foret étant en pression en situation de fonctionnement.

## Claims

1. - Diamond-tipped drilling device with integral cooling comprising a drill bit (1) having a hollow body (1a) the front part of which extends as a long tubular head (1b) having a smaller diameter, the protruding end of which is designed to accommodate the active diamond-tipped or carbide or similar drilling part (1g), **characterised**
**in that** said drill bit (1) comprises a deformable cartridge (3) filled with a coolant (4) having a pocket shape (3a) inserted into the body of said drill bit and pressing against the internal seat (1d) part of the latter, said pocket having a longitudinal tail (3b) inserted into the tubular head of the drill bit and substantially protruding beyond the active diamond tipped part (1g),
and **in that** the drill bit comprises, rearwardly and inside its body, a drill-bit holder and cartridge-pressure component (2) capable of exerting pressure against pocket (3) and allowing, after tearing, complete draining of the coolant that it contains.

2. - A device as claimed in claim 1, **characterised in that** the drill bit (1) has a central opening (1e) in a tapered dome (1f) shape constituting a means of retention.

3. - A device as claimed in either claim 1 or 2, **characterised in that** the active diamond tipped part (1g) at the end of the head part (1b) of the drill bit is an internally hollow extension of the internal cavity of the head (1b) of the drill bit and **in that** it has a longitudinal slot (1h) enabling dispensing of the coolant.

4. - A device as claimed in claim 3, **characterised in that** the active hollow part is offset.

5. - A device as claimed in any of claims 1 to 4, **characterised in that** the drill bit internally has at least one means of rotational driving such as a longitudinal slot (1m) constituting a female means of rotational driving and accepting sliding of the drill-bit holder and cooperating with at least one keying means (2c) on drill-bit holder (2).

6. - A device as claimed in any of claims 1 to 5, **characterised in that** the cartridge (3) has a main part (3a) at the end of the pocket inserted into drill bit (1) and pressing against the seat part (1d), the pocket extending as a tubular tail (3b) fitted in the tubular head part (1b) of the drill bit, and passing through the diamond-tipped part (1g), part (3c) of said tubular tail protruding from the diamond-tipped part when it is not stressed.

7. - A device as claimed in claim 6, **characterised in that** the end part (3c) of the cartridge has an area that can tear after it makes contact with the wall that is to be drilled.

8. - A device as claimed in either claim 6 or 7, **characterised in that** the cartridge (3) defines a chamber (V1) for accommodating an amount of coolant equivalent to a pre-established quantity depending on the characteristics of the hole to be drilled.

9. - A device as claimed in any of claims 6, 7 and 8, **characterised in that** the cartridge is made of a plastic material having properties that enable it to deform when subjected to pressure by the drill-bit holder.

10. - A device as claimed in any of claims 1 to 9, **characterised in that** the drill-bit holder has a cylindrical sleeve (2a) with an axial extension (2b) towards the front on which means of rolling (6) fit, the drill-bit holder (2) having an internal thread (2d) allowing its adjustment with the rotating part of the portable electric machine, said drill-bit holder being capable of gradually being moved in the drill bit by exerting gradual pressure against the cartridge and allowing emptying of the coolant.

11. - A device as claimed in any of claims 1 to 10, **characterised in that** the drill bit is freely and guidably mounted on the drill-bit holder by being mounted so that they slide and/or roll relative to each other, the drill bit being subjected to pressure when it is operating.

## Patentansprüche

1. Bohrvorrichtung mit Diamantkopf und integrierter Kühlung mit einem Bohrer (1), der ein hohles Gehäuse (1a) besitzt, dessen Vorderteil durch einen rohrförmigen Kopf (1b) mit kleinem Durchmesser und großer Länge verlängert wird, dessen überstehendes Ende so angeordnet ist, dass es den aktiven Teil des Bohrers mit Diamantkopf (1b), Karbid oder ähnlichem aufnimmt, **dadurch gekennzeichnet, dass** der Bohrer (1) einen verformbaren Einsatz (3) besitzt, der mit einer Kühlflüssigkeit (4) gefüllt ist, der Taschenform (3a) hat, die in das Bohrergehäuse eingeführt wurde, und sich auf seinen Innensitzabschnitt (1d) abstützt, wobei die Tasche ein längsverlaufendes Verlängerungsstück (3b) aufweist, das in den rohrförmigen Kopf des Bohrers eingeführt wurde, und im wesentlichen über den aktiven Abschnitt mit dem Diamanten (1g) hinausragt, und dass der Bohrer hinten und in seinem Gehäuse einen Bohrerhalter (2) (Druckelement) aufweist, der auf die Tasche (3) Druck ausübt und nach dem Riss die vollständige Entleerung der Kühlflüssigkeit ermöglicht.

2. Vorrichtung nach Anspruch 1, **dadurch gekennzeichnet, dass** der Bohrer (1) eine Öffnung in der Mitte (le) aufweist, die Ausgussform (1f) hat und verengt ist und ein Rückhaltelement darstellt.

3. Vorrichtung nach einem der Ansprüche 1 und 2, **dadurch gekennzeichnet, dass** der aktive Teil mit dem Diamanten (1g) am Ende des Kopfes (1b) des Bohrers innen in der Verlängerung des Innenhohlraums des Kopfes (1b) des Bohrers hohl ist, und dass er einen längsverlaufenden Ausschnitt (1h) besitzt, der die Verteilung der Kühlflüssigkeit ermöglicht.

4. Vorrichtung nach Anspruch 3, **dadurch gekennzeichnet, dass** der aktive, hohle Abschnitt versetzt ist.

5. Vorrichtung nach einem der Ansprüche 1 bis 4, **dadurch gekennzeichnet, dass** der Bohrer innen mindestens ein sich drehendes Antriebselement aufweist wie eine längsverlaufende Keilöffnung (1m), die ein Aufnahmeelement des sich drehenden Antriebs darstellt, und ein Gleiten des Bohrerhalters akzeptiert und mit mindestens einer Keilverbindung (2c) zusammenwirkt, die sich an dem Bohrerhalter (2) befindet.

6. Vorrichtung nach einem der Ansprüche 1 bis 5, **dadurch gekennzeichnet, dass** der Einsatz (3) einen Hauptabschnitt (3a) am Ende der in den Bohrer (1) eingeschobenen Tasche aufweist, indem er sich an dem Sitzabschnitt (1d) abstützt, wobei sich die Tasche in ein rohrförmiges Verlängerungsstück (3b) verlängert, das in den rohrförmigen Kopf (1b) des Bohrers eingreift, der über den Diamantabschnitt (1g) verläuft, und darüber hinausragt, und zwar in einem Augenblick, in dem er nicht durch sein Ende (3c) beansprucht wird.

7. Vorrichtung nach Anspruch 6, **dadurch gekennzeichnet, dass** der Endabschnitt (3c) des Einsatzes einen Bereich aufweist, der nach der Berührung mit der zu durchbohrenden Wand abgerissen werden kann.

8. Vorrichtung nach einem der Ansprüche 6 und 7, **dadurch gekennzeichnet, dass** der Einsatz (3) ein Aufnahmevolumen (V1) für eine Kühlflüssigkeit definiert, das einer Dosierung entspricht, die in Abhängigkeit von den Eigenschaften des zu durchbohrenden Loches vorher festgelegt worden ist.

9. Vorrichtung nach einem der Ansprüche 6, 7, 8, **dadurch gekennzeichnet, dass** der Einsatz aus Kunststoff hergestellt ist, der unter dem Druck des Bohrerhalters Verformungseigenschaften besitzt.

10. Vorrichtung nach einem der Ansprüche 1 bis 9, **dadurch gekennzeichnet, dass** der Bohrerhalter einen zylindrischen Stutzen (2a) mit einer axialen Verlängerung (2b) besitzt, an dessen vorderem Ende sich Rollenelemente (6) befinden, wobei der Bohrerhalter (2) ein Innengewinde (2d) besitzt, so dass er mit dem Drehabschnitt der ortsveränderlichen elektrischen Maschine verstellt werden kann, wobei der Bohrerhalter nach und nach in dem Bohrer verschoben werden kann, indem zunehmender Druck auf den Einsatz ausgeübt wird, und die Entleerung der Kühlflüssigkeit möglich ist.

11. Vorrichtung nach einem der Ansprüche 1 bis 10, **dadurch gekennzeichnet, dass** der Bohrer geführt und frei an dem Bohrerhalter montiert ist, indem er zueinander verschiebbar und/oder mit Rollen montiert ist, wobei der Bohrer während des Betriebs unter Druck steht.
